# EUROPÄISCHE PATENTANMELDUNG

(11) **EP 0 639 785 A1**
(43) Veröffentlichungstag der Anmeldung: **22.02.1995**
(21) Anmeldenummer: 94890130.1
(22) Anmeldetag: 02.08.1994
(51) Int. Cl.: G02C 5/22

(54) **Federscharnier für Brillen**

(30) Priorität: 20.08.1993 AT 1680/93
(71) Anmelder: Simon Redtenbacher seel. Wwe. & Söhne, 4644 Scharnstein 39 (AT)
(72) Erfinder: Zelko, Janez, A-4643 Pettenbach (AT)
(74) Vertreter: Hübscher, Helmut, Dipl.-Ing.

(57) **Zusammenfassung**

Es wird ein Federscharnier für Brillen mit einem in einem bügelseitigen Gehäuse (6) in Bügellängsrichtung verschiebbar geführten Scharnierteil (1), der einen in Verschieberichtung abstehenden, eine Schraubenfeder (11) durchsetzenden Bolzen (9) mit einem Anschlagkopf (12) für die Schraubenfeder (11) am freien Bolzenende aufweist, und mit einer schnappverschlußartigen Rasteinrichtung zwischen dem scharnierseitigen Ende der Schraubenfeder (11) und dem die Schraubenfeder (11) mit dem Bolzen (9) aufnehmenden Gehäuse (6) beschrieben, das eine Rastaufnahme (13) für einen in bezug auf den Bolzen (9) bzw. die Schraubenfeder (11) radial federnden Rastkörper als Rasteinrichtung bildet, wobei der Rastkörper aus wenigstens einer Windung (11a) der Schraubenfeder (11) mit einem gegenüber den anderen Windungen größeren Außendurchmesser besteht.

## Beschreibung

Die Erfindung bezieht sich auf ein Federscharnier für Brillen mit einem in einem bügelseitigen Gehäuse in Bügellängsrichtung verschiebbar geführten Scharnierteil, der einen in Verschieberichtung abstehenden, eine Schraubenfeder durchsetzenden Bolzen mit einem Anschlagkopf für die Schraubenfeder am freien Bolzenende aufweist, und mit einer schnappverschlußartigen Rasteinrichtung zwischen dem scharnierseitigen Ende der Schraubenfeder und dem die Schraubenfeder mit dem Bolzen aufnehmenden Gehäuse, das eine Rastaufnahme für einen in bezug auf den Bolzen bzw. die Schraubenfeder radial federnden Rastkörper als Rasteinrichtung bildet.

Bei einem bekannten Federscharnier dieser Art (EP-A-0 340 161) wird der federnde Rastkörper der Rasteinrichtung durch einen geschlitzten Federring oder eine Hülse mit radial federnden Zungen gebildet, wobei dieser mit einer inneren Ringnut des hülsenartigen Gehäuses zusammenwirkende Rastkörper auf den Bolzen aufgeschoben wird und zwischen dem Scharnierteil und der vom Bolzen durchsetzten Schraubenfeder zu liegen kommt, so daß eine Baueinheit gebildet wird, die zur Verbindung mit einem Brillenbügel lediglich in das am Bügel vorgesehene Gehäuse eingeschoben werden muß, bis der Rastkörper in den Bereich der nutartigen Rastausnehmung des Gehäuses gelangt und der beim Einführen der Baueinheit in das Gehäuse radial zusammengedrückte Federring bzw. die federnden Zungen der Hülse in die Rastausnehmung schnappverschlußartig einrasten. Damit ergibt sich für die Schraubenfeder, die zwischen dem Rastkörper und dem Anschlagkopf am freien Bolzenende unter einer Druckvorspannung gehalten wird, eine gehäusefeste Abstützung, so daß der Scharnierteil über die Schraubenfeder in einer anschlagbegrenzten Grundstellung gehalten wird. Von dieser Grundstelllung kann der Scharnierteil jedoch gegen die Kraft der Schraubenfeder aus dem Gehäuse herausgezogen werden, um den Brillenbügel über seine anschlagbegrenzte Strecklage hinaus ausbiegen zu können, ohne eine Beschädigung des Scharniergelenkes befürchten zu müssen. Als Vorteil dieser bekannten Federscharniere ist vor allem anzusehen, daß der Rastkörper mit dem die Schraubenfeder aufweisenden Scharnierteil eine Baueinheit bildet und daß daher keine gesonderten Rastkörper vorzusehen sind. Nachteilig ist allerdings, daß die Rasteinrichtung eines gesonderten, radial federnden Rastkörpers bedarf, der den Herstellungsaufwand naturgemäß vergrößert, was insbesondere bei hohen Stückzahlen, wie sie bei Brillenscharnieren anfallen, von Bedeutung ist.

Der Erfindung liegt somit die Aufgabe zugrunde, ein Federscharnier für Brillen der eingangs geschilderten Art mit einfachen konstruktiven Mitteln so auszugestalten, daß der Vorteil solcher Federscharniere uneingeschränkt ausgenützt werden kann, ohne die Nachteile durch die gesonderten Rastkörper in Kauf nehmen zu müssen.

Die Erfindung löst die gestellte Aufgabe dadurch, daß der Rastkörper aus wenigstens einer Windung der Schraubenfeder mit einem gegenüber den anderen Windungen größeren Außendurchmesser besteht.

Aufgrund des größeren Außendurchmessers zumindest der scharnierseitigen Endwindung der Schraubenfeder kann diese Endwindung als Rastkörper eingesetzt werden, der beim Einschieben der aus dem Scharnier und der auf dem Bolzen angeordneten Schraubenfeder gebildeten Baueinheit in das bügelseitige Gehäuse radial federnd zusammendrückbar ist, um im Bereich der Rastaufnahme in diese schnappverschlußartig einzugreifen. Die Endwindung mit dem größeren Außendurchmesser stützt sich somit in der Rastaufnahme gegensinnig zur Einschubrichtung formschlüssig ab und verhindert, daß die Schraubenfeder wieder aus dem Gehäuse gezogen werden kann. Für die notwendige Auffederung des Rastkörpers brauchen wegen der Federeigenschaften der Schraubenfeder keine besonderen Vorkehrungen getroffen zu werden, so daß sich eine sehr einfache und zweckmäßige Konstruktion ergibt.

Nimmt der Durchmesser der scharnierseitigen Windungen der Schraubenfeder zur Endwindung hin allmählich zu, so wird nicht nur eine einfachere Herstellung einer entsprechend größeren Endwindung erreicht, sondern auch das Einführen der Feder in das Gehäuse unterstützt, weil sich durch das allmähliche Anwachsen der Außendurchmesser der Schraubenwindungen gewissermaßen eine konische Anlauffläche bildet, über die das radiale Einfedern der Endwindungen beim Einschieben der Baueinheit in das Gehäuse erleichtert wird.

Eine andere Möglichkeit, eine im Außenumfang größere Endwindung zu erreichen, besteht darin, den Federdraht der Schraubenfeder zumindest im Bereich der scharnierseitigen Endwindung zu umhüllen, so daß die Umhüllung über den Außendurchmesser der sonst zylindrischen Schraubenfeder vorragt.

In der Zeichnung ist der Erfindungsgegenstand beispielsweise dargestellt. Es zeigen
- Fig. 1: ein erfindungsgemäßes Federscharnier für eine Brille in einem Längsschnitt in der Grundstellung für die Strecklage des Bügels,
- Fig. 2: eine der Fig. 1 entsprechende Darstellung des Federscharnieres, jedoch in einer für die Überdrückung des Bügels über seine Strecklage hinaus kennzeichnenden Stellung und
- Fig. 3: einen Schnitt nach der Linie III-III der Fig. 1.

Das dargestellte Federscharnier besteht in herkömmlicher Weise aus zwei Scharnierteilen 1 und 2, die einerseits dem Bügel 3 und anderseits dem Bügelbacken 4 eines Brillengestelles zugeordnet sind und ineinandergreifende Scharnierlappen 1a und 2a aufweisen, die miteinander über einen Scharnierzapfen 5 gelenkig verbunden sind. Der dem Bügel 3 zugehörige Scharnierteil 1 ist in einem mit dem Bügel 3 fest verbundenen Gehäuse 6 verschiebbar geführt, das zur Drehsicherung des Scharnierteiles 1 eine einseitige Führungsausnehmung 7 für einen Ansatz 8 des Scharnierteiles 6 bildet. In der vom Scharnierzapfen 5 abgekehrten Stirnseite des Scharnierteiles 1 ist in diesem Scharnierteil 1 ein Bolzen 9 eingeschraubt, der in ein Sackloch 10 des Gehäuses 6 ragt und eine Schraubenfeder 11 aufnimmt, die sich an dem als Anschlagkopf 12 dienenden Bolzenkopf abstützt.

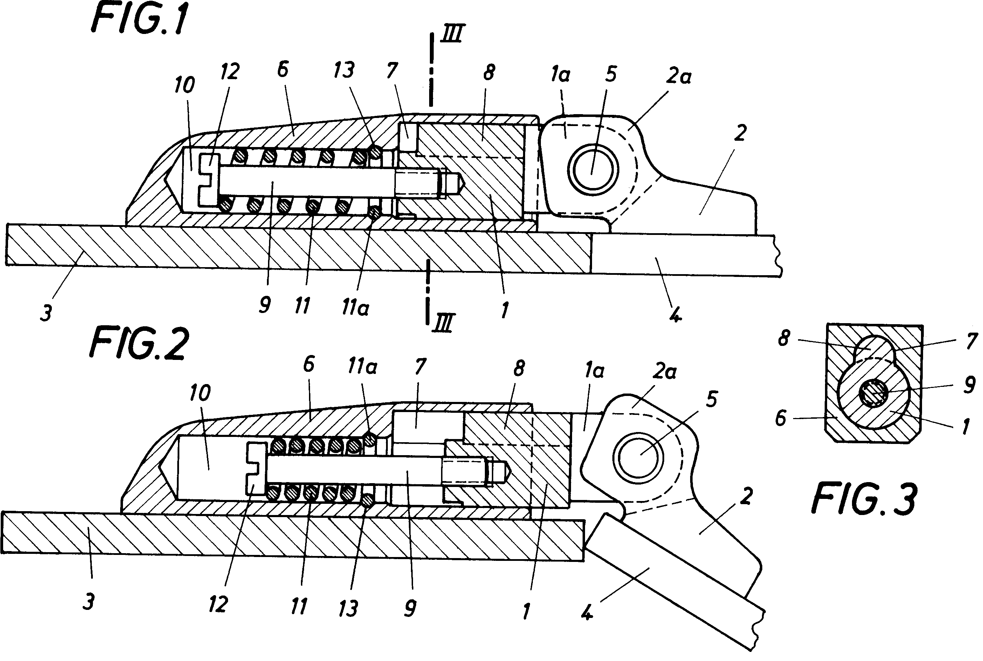

Zur Abstützung des dem Scharnierteil 1 zugekehrten Schraubenfederendes am Gehäuse 6 bildet die Schraubenfeder 11 zumindest eine Endwindung 11a, die hinsichtlich ihres Außendurchmessers größer als die übrigen Federwindungen ist und als Rastkörper mit einer Rastaufnahme 13 in Form einer inneren Ringnut des Sackloches 10 zusammenwirkt. Aufgrund der möglichen radialen Einfederung der Endwindung 11a kann die Schraubenfeder 11 auch mit ihrer Endwindung 11a über den Scharnierteil 1 in das Sackloch 10 eingeschoben werden, bis die Endwindung 11a die Rastaufnahme 13 erreicht und aufgrund der Federkraft in die Rastaufnahme 13 schnappverschlußartig eingreift, wie dies zeichnerisch in den Fig. 1 und 2 dargestellt ist. Das Scharnier kann demnach aus der in Fig. 1 dargestellten Strecklage des Bügels 3 aus dem Gehäuse 6 gegen die Kraft der Schraubenfeder 11 herausgezogen werden, wenn der Bügel 3 über die in Fig. 1 gezeichnete Strecklage hinaus in eine Überdrückungslage gemäß der Fig. 2 verschwenkt wird. Ein Überdrücken des Brillenbügels ist somit möglich, ohne eine Beschädigung des Scharniers oder ein Verbiegen des Bügels befürchten zu müssen. Die Ausziehlänge wird durch die Blocklänge der Schraubenfeder 11 zwangsläufig begrenzt.

Die Erfindung ist selbstverständlich nicht auf das dargestellte Ausführungsbeispiel beschränkt. So könnte die Rastaufnahme 13 unterschiedlich ausgebildet sein, weil es lediglich darauf ankommt, eine Abstützung der Schraubenfeder 11 über die Endwindung 11a in Ausziehrichtung des Scharnierteiles 1 zu erhalten. Außerdem müßte zur Vergrößerung des Außendurchmessers der Endwindung 11a nicht deren Durchmesser vergrößert werden. Zu diesem Zweck könnte der Federdraht im Bereich der Endwindung 11a umhüllt werden, beispielsweise mit Hilfe eines Schlauchstückes.

## Patentansprüche

1. Federscharnier für Brillen mit einem in einem bügelseitigen Gehäuse (6) in Bügellängsrichtung verschiebbar geführten Scharnierteil (1), der einen in Verschieberichtung abstehenden, eine Schraubenfeder (11) durchsetzenden Bolzen (9) mit einem Anschlagkopf (12) für die Schraubenfeder (11) am freien Bolzenende aufweist, und mit einer schnappverschlußartigen Rasteinrichtung zwischen dem scharnierseitigen Ende der Schraubenfeder (11) und dem die Schraubenfeder (11) mit dem Bolzen (9) aufnehmenden Gehäuse (6), das eine Rastaufnahme (13) für einen in bezug auf den Bolzen (9) bzw. die Schraubenfeder (11) radial federnden Rastkörper als Rasteinrichtung bildet, dadurch gekennzeichnet, daß der Rastkörper aus wenigstens einer Windung (11a) der Schraubenfeder (11) mit einem gegenüber den anderen Windungen größeren Außendurchmesser besteht.

2. Federscharnier nach Anspruch 1, dadurch gekennzeichnet, daß der Durchmesser der scharnierseitigen Windungen der Schraubenfeder (11) zur Endwindung (11a) hin allmählich zunimmt.

3. Federscharnier nach Anspruch 1, dadurch gekennzeichnet, daß der Federdraht der Schraubenfeder (11) zumindest im Bereich der scharnierseitigen Endwindung (11a) zur Vergrößerung des Außendurchmessers umhüllt ist.
